# EUROPÄISCHE PATENTANMELDUNG

(11) **EP 2 103 900 A1**
(43) Veröffentlichungstag der Anmeldung: **23.09.2009**
(21) Anmeldenummer: 09152236.7
(22) Anmeldetag: 06.02.2009
(51) Int. Cl.: G01B 17/06, G01B 21/20, G01N 21/88

(54) **Formbestimmung von Objekten bei der Oberflächenabtastung**

(30) Priorität: 20.03.2008 DE 102008015235; 19.01.2009 DE 102009005111
(71) Anmelder: Siemens Aktiengesellschaft, 80333 München (DE)
(72) Erfinder: Hain, Stefan, 91090 Effeltrich (DE); Mooshofer, Hubert, 80538 München (DE); de Carvalho Ferreira, Fabricio, 91052 Erlangen (DE)

(57) **Zusammenfassung**

Verfahren zur Inspektion von Bauteiloberflächen (1) mittels eines scannenden Prüfsystems, wobei die Ansteuerung des Prüfsystems derart geschieht, dass, ausgehend von einem bekannten Bereich der Bauteiloberfläche eine Schätzung der Bauteilform vorgenommen wird, die Schätzung am Rand (3) des bekannten Bereiches (4) zumindest für einen Teil des Rands (3) erstellt wird, diese Schätzung für die Berechnung der Bahnkurve (6) für das scannende System verwendet wird, die Inspektion beim Abscannen entlang dieser Bahnkurve (6) durchgeführt wird und die Abweichung von der wahren Bauteilform gemessen wird, so dass entlang dieser Bahnkurve die exakte Form des Bauteils bekannt ist.

## Beschreibung

Die Erfindung betrifft ein Verfahren zur Inspektion von Bauteiloberflächen mittels eines scannenden Prüfsystems.

Bei der zerstörungsfreien Prüfung eines Bauteils muss ein Prüfkopf bei scannenden Verfahren, beispielsweise zur Ultraschall- oder zur Wirbelstromprüfung entlang der Bauteiloberfläche bewegt werden, um im richtigen Abstand und Winkel die zu prüfenden Stellen testen zu können, damit die zu prüfende Oberfläche vollständig überdeckt wird.

Bei bestimmten Herstellungsverfahren wie beispielsweise Sintern oder Biegen oder durch Verschleiß an Bauteilen, welche bereits im Einsatz waren, treten individuell unterschiedliche Formabweichungen auf. Wenn die Formabweichungen bei der scannenden Prüfung nicht berücksichtigt werden, ist keine zuverlässige Inspektion der Bauteile durch ein scannendes Verfahren mit ausreichender Genauigkeit mehr möglich.

Aufgrund der individuellen Natur von Formabweichungen ist eine Formvermessung der Bauteile notwendig.

Eine bisherige Lösung besteht darin, vor der Prüfung die Form mit einem separaten Messsystem zu bestimmen, beispielsweise per Lichtschnittverfahren mit einem optischen System.
In einem weiteren Schritt muss anhand von Referenzpunkten sichergestellt werden, dass die gemessene Form von der Position und der Orientierung her zur Positionierung des Scan-Systems zugeordnet werden kann. Nachteilig bei dieser Verfahrensweise ist, dass die zusätzlichen Schritte Zeit kosten, d.h. den Durchsatz der Prüfanlage verringern und dass ein relativ großer zusätzlicher Aufwand für ein separates Formvermessungssystem erforderlich ist.

Bei Ultraschall-Tauchtechnik ist zusätzlich eine optische Formvermessung nur außerhalb des Tauchbeckens praktikabel.

Es ist weiterhin bekannt, die Bauteilform mit demselben scannenden System, Mechanik und Sensorik, zu vermessen, mit dem die Inspektion erfolgt. Vorteilhaft ist dabei, dass keine aufwändige zusätzliche Hardware notwendig ist. Falls jedoch zusätzliche Sensoren, die von derselben Elektronik ansteuerbar sind, nötig sind, erhöht sich der materielle Aufwand. Nachteilig ist, der hohe Zeitaufwand zur Vermessung der Form. In der Regel ist die Geschwindigkeit bestimmt durch die Arbeitsgeschwindigkeit der Scan-Mechanik, so dass insgesamt ungefähr der doppelte Zeitaufwand anfällt.

Es besteht die Möglichkeit, während des Scan-Vorgangs die Abweichung von der Bauteiloberfläche genau zu vermessen und diese Information sofort zur Steuerung der Scan-Mechanik zu verwenden. Dazu wäre jedoch ein extrem schneller Regelkreis aus Oberflächenmessung, Messauswertung und Motorsteuerung erforderlich. Dabei ist nachteilig, dass sehr kleine Totzeiten zu großen Positionierfehlern und damit zu einer unzuverlässigen Inspektion führen. Außerdem sind übliche Motorsteuerungen darauf ausgelegt, vorab bekannte Bahnkurven abzufahren.

Der Erfindung liegt die Aufgabe zugrunde, die Form eines Prüflings mit demselben scannenden System, Mechanik und Sensorik, zu vermessen, wobei die Zeit für zusätzliche Scan-Bewegungen fast vollständig einzusparen ist.

Die Lösung dieser Aufgabe geschieht anhand der Merkmalskombination des Anspruchs 1.
Vorteilhafte Ausgestaltungen können den Unteransprüchen entnommen werden.

Die Erfindung basiert darauf zur Steuerung des scannenden Systems anstelle der tatsächlichen Bauteilform eine Schätzung der Bauteilform zu verwenden.

Die Schätzung ist hinreichend nahe der wahren Form zu treffen, damit die Inspektion mit der geforderten Genauigkeit durchgeführt werden kann. Vorteilhaft ist, dass zu Beginn der Inspektion die vollständige Bauteilform oder eine Abschätzung der vollständigen Bauteilform nicht notwendig ist. Vielmehr reicht es, die Bauteilform vor dem Abfahren einer Scan-Kurve im Bereich dieser Scan-Kurve zu schätzen.

Bei dem Verfahren wird, ausgehend von einem bekannten Bereich, eine Schätzung für die Bauteilform am Rande des bekannten Bereiches erstellt bzw. zumindest für einen Teil des Randes des bekannten Bereiches. Mit dieser Schätzung wird dann die Bahnkurve für die Scan-Mechanik berechnet. Beim Scan entlang dieser Bahnkurve wird die Inspektion durchgeführt und zugleich die Abweichung von der wahren Bauteilform gemessen, so dass anschließend auch entlang dieser Bahnkurve die exakte Form des Bauteils bekannt ist.

Damit ist es lediglich zu Beginn einer Inspektion notwendig, für einen kleinen Bereich der Bauteiloberfläche die Form beispielsweise mit einer oder wenigen Scan-Linien, vorab zu bestimmen.

### Ablauf einer ausgewählten Schätzung:

- Ausgangspunkt ist die Kenntnis der wahren Form für einen Ausschnitt des Bauteils,
- Zur Schätzung kann ein Formmodell eingesetzt werden:
   -- ein globales -,
   -- ein partielles - oder
   -- ein lokales Formmodell.

### Formmodelle sind beispielsweise:

-- lokale Formmodelle: beispielsweise Ebenen-, Zylinder-oder Kugelausschnitt etc,
-- globales oder partielles Formmodell; beschreibt die Form des Prüflings insgesamt, bzw. in großen Abschnitten.
-- wird der Gesamtbereich betrachtet, d.h. die Gestalt des Prüflings, so hängt das Modells vom Prüfling ab. Da zur Erstellung eines globalen Formmodells alle möglichen Arten von Deformationen berücksichtigt werden, ist ein lokales Formmodell meist einfacher zu handhaben.
-- Ein möglicher Nutzen eines globalen Formmodells besteht bei stark gekrümmten Stellen am Bauteil.
   - Anpassen des Formmodells an die bekannten Teile der wahren Form.
   - Berechnung der Parameter des Formmodells, so dass das Formmodell und die wahre Form möglichst gut zur Deckung kommen.
   - Bestimmung der Parameter mittels Regression:
-- Bei globalem Formmodell für den gesamten Prüfling,
-- Bei partiellem Formmodell jeweils nacheinander für die Bereiche des Prüflings,
-- Beim lokalen Formmodell nacheinander für jede als nächstes zu inspizierenden Stelle in der Nachbarschaft.
   - Schätzung der Bauteilform für die als nächstes zu inspizierenden Stellen:
   - weiterhin kann eine Glättung der geschätzten Bauteilform durch Tiefpass-Filterung erfolgen,
   - weiterhin kann eine Plausibilitätskontrolle der geschätzten Bauteilform erfolgen, beispielsweise zur Prüfung einer Krümmung; Vergleich mit Apriori-Wissen,
   - Berechnung der Scan-Bahnkurve anhand der Oberflächenform
   - Glättung der Scan-Bahnkurve beispielsweise durch Tiefpass-Filterung.
   - weiterhin kann eine Plausibilitätskontrolle der Scan-Bahnkurve wie beispielsweise die Kontrolle der Krümmung, Vergleich mit Apriori-Wissen, erfolgen.

### Folgende Vorteile werden durch die Erfindung erreicht:

- Vorab ist keine Formvermessung des kompletten Prüfbereiches an einem Bauteil notwendig.
- Es besteht kein Hardware Aufwand für ein zusätzliches Formvermessungssystem.
- Abgesehen vom Startbereich sind keine zusätzlichen Scanbewegungen zur Formvermessung erforderlich.
- Erzielbar ist eine Steigerung des Inspektionsdurchsatzes, womit eine Senkung der Prüfkosten pro Bauteil erfolgt.
- Die Bahnkurve ist vor dem tatsächlichen Abfahren bekannt.
- Einsetzbereich: bei Standard-Motorsteuerungen.

### Es folgen Variationsmöglichkeiten der Erfindung:

- Verwendung derselben Sensoren für Inspektion einerseits und Bestimmung der Bauteilform andererseits.
- Prüfung und ggf. Wiederholung einzelner Scan-Linien, bei großer Abweichung zwischen Schätzung und tatsächlicher Form.
- Dynamische Auswahl des Formmodelles.
- Der bekannte Bereich kann aus mehreren nicht zusammenhängenden Teilen bestehen.
- Falls der bekannte Bereich ein Rechteck ist, ist eine einseitige oder zweiseitige Erweiterung möglich.
- Verquickung von Prüflingsbewegung und Bauteilform, beispielsweise bei einem zylindrischen Rohr.

Im Folgenden werden anhand von schematischen die Erfindung nicht einschränkenden Figuren Ausgestaltungen beschrieben.
- Figur 1: zeigt eine Schematische Skizze der Bereiche bekannter / geschätzter Form (bei Mäander-Scan),
- Figur 2: zeigt eine Schematische Skizze der Bereiche bekannter / geschätzter Form (bei Spiral-Scan),
- Figur 3: zeigt eine Schematische Skizze der Bereiche bekannter / geschätzter Form (bei Scan der Oberfläche eines zylindrischen Rohrs),
- Figur 4: zeigt eine Kombination von Prüflingsbewegung und Bauteilform bei zylindrischem Rohr,
- Figur 5: zeigt ein Ebenenmodell zur lokalen Schätzung der Bauteilform,
- Figur 6: giebt eine Illustration der Wiederholung einzelner Scan-Linien wieder, bei großer Abweichung 5.

Ausgangspunkt ist Kenntnis der wahren Form für einen Ausschnitt Bauteils. Zur Schätzung kann ein globales, ein partielles oder ein lokales Formmodell eingesetzt werden, beispielsweise Ebenen-, Zylinder- oder Kugelausschnitt.

Ein globales bzw. eines partielles Formmodell beschreibt die Form des Prüflings insgesamt, bzw. in großen Bereichen, d.h. die Gestalt des Modells hängt vom Prüfling ab. Da zur Erstellung eines globalen Formmodells viele Arten von Deformationen berücksichtigt werden, ist ein lokales Formmodell meist einfacher zu handhaben.

Ein möglicher Nutzen eines globalen Formmodells besteht bei Kontrolle der Krümmung, mit Vergleich Apriori-Wissen.

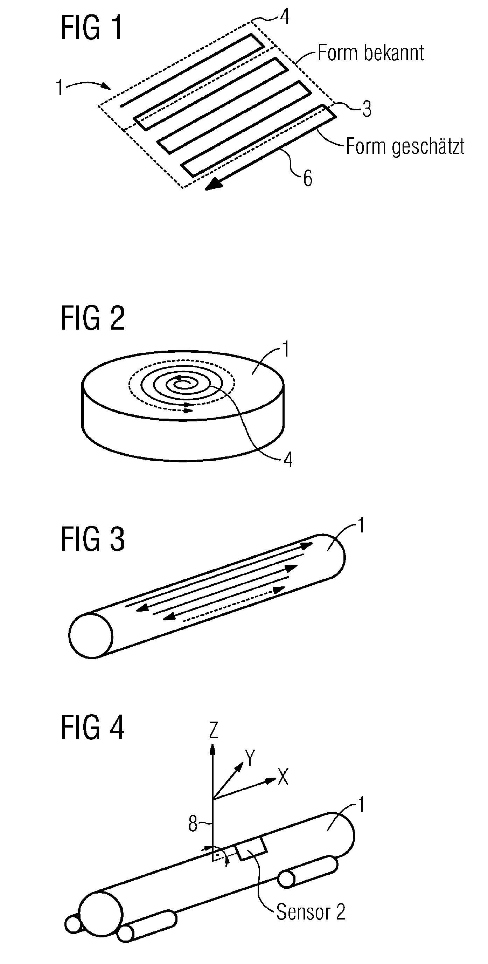

Figur 1 stellt eine Skizze mit einem ebenen Formmodell dar. Am Anfang der Bahnkurve 6 ist auf der Bauteiloberfläche 1 ein Teil der Form dieser Oberfläche bekannt. Diese wurde beispielsweise mit einem separaten Prüfsystem vermessen. Ausgehend von diesem bekannten Bereich 4 sind im Figur 1 bereits Schätzungen und Korrekturen für den jeweils nächsten Abschnitt der Bahnkurve eingetragen. An einem Rand 3 des bekannten Bereiches 4 werden für eine zu ermittelnde Bahnkurve Schätzwerte, beispielsweise Interpretationswerte, angenommen. Anhand dieser Schätzung wird die Berechnung einer Bahnkurve 6 für das scannende System vorausberechnet. Mit diesen Daten wird die Inspektion entlang der Bahnkurve 6 durchgeführt und die Abweichung von der **waren Bauteilform** gemessen. In Figur 1 ist der Rand 3 zwischen bekanntem Bereich 4 und außenliegendem Bereich für Schätzung bzw. Interpretation gekennzeichnet. Die geschätzte Form der Bahnkurve 6 liegt somit, wie dargestellt, außerhalb des bekannten Bereiches 4.

In Figur 2 ist das System aus bekanntem, geschätztem, korrigiertem und wiederum geschätztem Bereich auf eine spiralförmige Abtastung einer Werkstückoberfläche 1 dargestellt. Wenn die spiralförmige Bahnkurve sich von innen nach außen erstreckt, so sind innere Bereiche der Bahnkurve beispielsweise separat vermessen und stellen einen bekannten Bereich 4 dar. Die nächstliegenden Bereiche nach Außen werden jeweils zunächst geschätzt, danach wird eine Bahnkurve vorausberechnet und anschließend wird, gleichzeitig mit der Inspektion der Werkstückoberfläche, diese Bahnkurve abgefahren, wobei Abweichungen von der wahren Bauteilform gemessen werden, so dass entlang dieser Bahnkurve die exakte Form des Bauteiles ermittelbar ist.

Figur 3 zeigt eine schematische Skizze der Bereiche bekannter bzw. geschätzter Form bei einem Prüfvorgang an der Oberfläche eines zylindrischen Rohres.

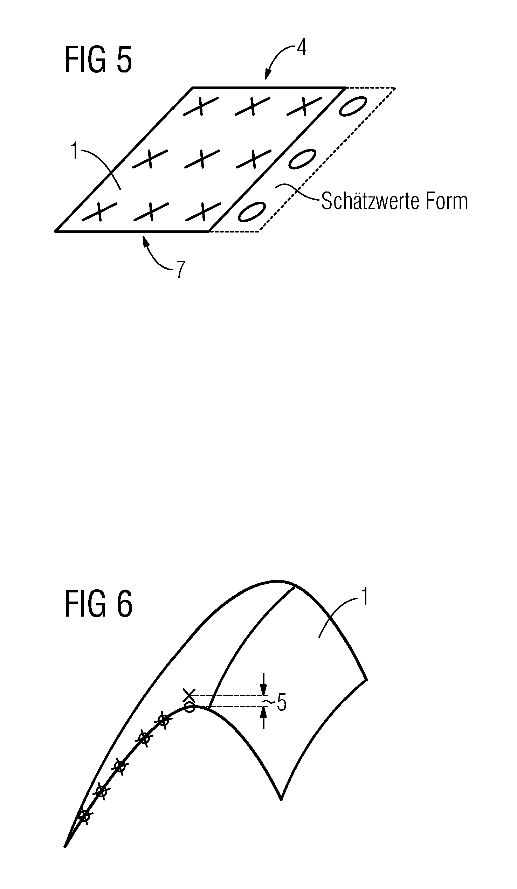

In Figur 5 ist eine Kombination dargestellt, die zusätzlich zur Ermittlung von Daten an der Oberfläche eines zylindrischen Rohres eine Bewegung des Prüflings berücksichtigt. Auf der Lagerung und gleichzeitig auf dem Antrieb, dargestellt durch Lagerwalzen für eine Welle, wird ein zylindrischer Körper oder eine Welle gedreht. Fall die Bahnkurve der Oberfläche nicht ideal ausgebildet ist, so ergibt sich die Form der Bahnkurve durch die Form in Längsrichtung addiert um die Mittelpunktsbewegung. Eine Mittelpunktsbewegung wird jeweils dann auftreten, wenn die nicht ideale Kreisform der Welle dazu führt.

Figur 5 vermerkt in einem bekannten Bereich 4 wahre Stützstellen die in einem bekannten Bereich 4 gesichert sind. Der Rand 3 dieses bekannten Bereiches 4 stellt wiederum die Grenze von zuverlässig ermittelten Daten dar. Außerhalb liegenden Stützstellen beruhen auf Schätzwerten, wobei in Figur 5 ein Formmodell 7 dargestellt ist, welches insbesondere ein ebenes Formmodell ist.

Figur 6 gibt einen Hinweis auf die Wiederholung einzelner Scanlinien. Eine derartige Wiederholung wird erforderlich, falls eine zu große Abweichung 5 zwischen geschätztem Wert bzw. Stützstelle und wahrem Wert auftritt.

## Patentansprüche

1. Verfahren zur Inspektion von Bauteiloberflächen (1) mittels eines scannenden Prüfsystems, wobei
- die Ansteuerung des Prüfsystems derart geschieht, dass, ausgehend von einem bekannten Bereich der Bauteiloberfläche eine Schätzung der Bauteilform vorgenommen wird,
- die Schätzung am Rand (3) des bekannten Bereiches (4) zumindest für einen Teil des Rands (3) erstellt wird,
- diese Schätzung für die Berechnung einer Bahnkurve (6) für das scannende System verwendet wird,
- die Inspektion beim Abscannen entlang dieser Bahnkurve (6) durchgeführt wird und
- die Abweichung von der wahren Bauteilform gemessen wird, so dass entlang dieser Bahnkurve die exakte Form des Bauteils bekannt ist.

2. Verfahren nach Anspruch 1, bei dem
sowohl die Inspektion, als auch die Bestimmung der Bauteilform mit Einsatz derselben Sensoren (2) geschieht

3. Verfahren nach Anspruch 1 oder 2, bei dem
bei der Inspektion eine Wiederholung einzelner Scan-Linien, bei großer Abweichung (5) zwischen Schätzung und tatsächlicher Form.

4. Verfahren nach einem der vorherigen Ansprüche, bei dem eine dynamische Auswahl des Formmodells (7) vorgenommen wird.

5. Verfahren nach einem der vorherigen Ansprüche, bei dem ein bekannter Bereich aus mehreren nicht zusammenhängenden Teilen besteht.

6. Verfahren nach einem der vorherigen Ansprüche, bei dem ein bekannter Bereich, der Rechteckform aufweist, einseitig oder zweiseitig erweiterbar ist.

7. Verfahren nach einem der vorherigen Ansprüche, bei dem eine Verknüpfung von Prüflingsbewegung und Bauteilform, beispielsweise bei einem zylindrischen Rohr vorgenommen wird.

8. Verfahren nach einem der vorherigen Ansprüche, bei dem eine Schätzung der Bauteilform für die als nächstes zu inspizierenden Stellen geschieht.

9. Verfahren nach einem der vorherigen Ansprüche, bei dem eine Glättung der geschätzten Bauteilform durch Tiefpass-Filterung erfolgt.

10. Verfahren nach einem der vorherigen Ansprüche, bei dem eine Plausibilitätskontrolle der geschätzten Bauteilform zur Prüfung einer Krümmung erfolgt.

11. Verfahren nach Anspruch 10, bei dem
mit Apriori-Wissen geschätzt wird,

12. Vorrichtung zur Durchführung eines Verfahrens entsprechend einem der Ansprüche 1 bis 11, welche zur Inspektion von Bauteiloberflächen (1) zur Durchführung einer scannenden Prüfung an mindestens einem Handhabungssystem mindestens einen Sensor (2) über die Bauteiloberflächen (1) führt, wobei die Ansteuerung des Handhabungssystems derart geschieht, dass ein bekannten Teilereich der Bauteiloberfläche angefahren wird, eine Schätzung am Rand (3) des bekannten Bereiches (4) zumindest für einen Teil des Rands (3) vorgenommen wird, diese Schätzung für die Berechnung einer Bahnkurve (6) für die scannende Prüfung verwendet wird und die Inspektion beim Abscannen entlang dieser Bahnkurve (6) durchgeführt wird.

13. Verfahren nach Anspruch 12, bei dem
bei der Inspektion einer Bauteiloberfläche (1) zusätzlich eine Bewegung des Prüflings erfassbar ist.

14. Verfahren nach Anspruch 13, bei dem der Prüfling eine zylindrische drehende Welle ist.
